# EUROPEAN PATENT SPECIFICATION

(11) **EP 0 552 026 B1**
(45) Date of publication and mention of the grant of the patent: **03.04.1996**
(21) Application number: 93300202.4
(22) Date of filing: 14.01.1993
(51) Int. Cl.: B62D 53/02, B62D 47/02, B60D 5/00

(54) **Articulation joint**
Gelenkverbindung
Joint articulé

(30) Priority: 14.01.1992 GB 9200660
(43) Date of publication of application: 21.07.1993
(73) Proprietor: DOSCO OVERSEAS ENGINEERING LIMITED, Tuxford, Newark Nottinghamshire, NG22 0PQ (GB)
(72) Inventor: Etherington, Michael, Abingdon, Virginia 24210 (US); Long, Michael Robert, Gainsborough, Lincs. DN21 1DB (US)
(74) Representative: Carpmael, John William Maurice

(56) References cited:
- EP-A- 0 340 760
- DE-B- 1 013 527

## Description

The present invention relates to an articulation joint, and in particular to such a joint for use in mining machinery. While it is envisaged the joint would be very useful in conveyors, especially portable ones, it has been designed for use in an articulated haulage vehicle. The joint has been particularly designed for use as a vertical pivot joint in an articulated shuttlecar for use in mining operations.

Joints for use in conveyors, haulage vehicles and even articulated shuttlecars are known. Articulated shuttlecars are also known. Most of these have a horizontal pivot to allow them to negotiate uneven mine floors. Most haulage vehicles have vertical pivot joints, and the loadings on the pivot joint are not very high, since these joints are normally between a cab portion and a load carrying portion of the vehicle. However, in US-A-4160619, a vertical pivot joint in the middle of a shuttlecar is disclosed, which is comprised of spaced upper and lower plates on one portion of the shuttlecar pivotally connected to upper and lower plates on the other portion, the pivotal connections incorporating bearing races, and the two races being spaced apart to accommodate a pair of steering rams between them. Because of the spacing, the joint is not sufficiently stiff for use in a commercially acceptable shuttlecar. Also, because of the arrangement of the plates in the joint, it is necessary for the joint to be assembled partly from above and partly from below, and this is a disadvantage.

The articulation joint of the present invention does not suffer from these disadvantages.

According to the present invention, we provide an articularion joint for pivotally connecting together two portions of a mining machine, the joint comprising first and second slewing rings, each comprising an outer member and an inner member with a bearing race located between the two members, the outer members being connectable to one portion of the mining machine and the inner member being connectable to the other portion of the mining machine, and wherein the two slewing rings are rigidly connected to each other.

Preferably, the outer members are connected to one portion of the mining machine and the inner members are connected to the other portion of the machine, so that, in use, the one portion can pivot relative to the other portion about a vertical axis.

Preferably, the one portion comprises a flat annular clevis with a plurality of circumferentially spaced apertures extending parallel to the central axis of the annulus therein, the respective outer members of each slewing ring being secured to opposite faces of the clevis by a plurality of bolts passing through apertures in the members and the apertures in the clevis.

Preferably, the said one portion comprises a male half of the joint.

Preferably, the other portion of the mining machine comprises a female half of the joint and is formed of two vertically spaced, horizontally extending plates between which the male part extends, the inner members of each slewing ring being connected, respectively, to the inner faces of the respective plates.

Preferably, the two inner members are spaced apart by an inner spacer ring, and the two inner members, the inner spacer ring and the two horizontal, vertically spaced plates are connected together by a plurality of threaded studs passing through respective ones of a plurality of vertically aligned apertures arranged in a circle and circumferentially spaced from each other.

Preferably also, an upper location ring is provided to locate one of the inner members beneath the upper one of the two horizontal, vertically spaced plates, and a lower spacer is provided between the inner face of the lower one of the two horizontally spaced plates and the lower one of said inner members.

Preferably, a lower location ring is provided which initially is located within the male half of the joint, but when the male and female halves of the joint are assembled, it seats within the inner spacer ring, and extends into a lower part of the joint. Preferably, the lower location ring therefore has a lower portion of reduced internal diameter, which locates tightly within the lower space and the lower one of said two horizontally spaced plates of the female half of the joint, with a step defining the reduced diameter resting on said lower spacer. The lower location ring thus relieves the threaded studs of excessive loads.

Preferably, the upper one of said spaced plates is provided with a plurality of circumferentially spaced recesses in its upper face, in the base of which the apertures for said threaded studs are provided, the recesses being sufficiently deep to receive the heads of the bolts so that they do not project above the main surface of said upper plate. Studs for securing the location ring are also preferably located in said recess.

The above construction provides an absolutely rigid articulation joint, and has the further advantage that it can be assembled from above, since the bolts connecting the outer members of the slewing rings to the clevis can be put in position before the joint is assembled, and after assembly all the studs can be inserted from the top of the assembled joint. This is an important safety factor.

Preferably, the clevis is welded within an annular plate, to which one or more brackets is welded and to which a steering means may be connected to cause the one portion of the machine to pivot relative to the other about the articulation joint.

Preferably, the male half of the joint is formed of two vertically spaced plates held apart by said annular plate, there being an arcuate step in the upper one of said plates, the arcuate step being centred on the pivot axis of the joint, and the upper plate of the female half of the joint has a projecting portion with an arcuate edge which fits with a snug fit within the arcuate step.

Preferably, the two joint halves form part of two relatively movable portions of a mine shuttlecar, and an upper run of a conveyor chain is movable across the upper plates of the two halves, and a return run of the chain passes beneath the joint and on top of bottom plates forming part of each joint half.

A preferred embodiment of articulation joint according to the invention is now described by way of example with reference to the accompanying drawings, in which:-
FIGURE 1a is a partly schematic plan view of an articulated shuttlecar incorporating two of the joints;
FIGURE 1b is a partly schematic side elevation, partly in section, of the shuttlecar;
FIGURE 1c is a scrap plan view showing one of the joints articulated;
FIGURE 2a is a section through a female half of the joint, to a larger scale;
FIGURE 2b is an exploded section through a male half of the joint;
FIGURE 2c is a section through the assembled joint;
FIGURE 3 is a plan view of one of the slewing rings shown in figure 2b, and
FIGURE 4 is a plan view of the joint to a larger scale.

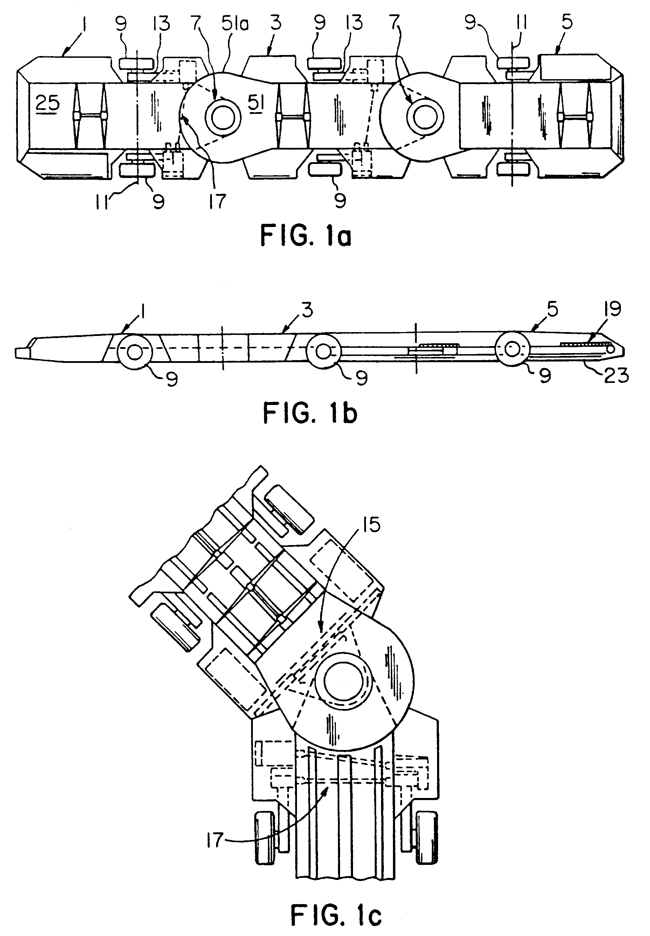

Referring to the drawings, Figures 1a - 1c show an articulated shuttlecar which is the subject of our copending Patent Application EP-A-0552027 claiming priority from U.K. Application No.9200678.2 being filed contemporaneously herewith. The shuttlecar has two end portions 1 and 5, separated by a central portion 3, adjacent portions 1 and 3, and 3 and 5, being pivotally connected about vertical pivots by an articulation joint 7 of the present invention. Each portion 1, 3 and 5 has a pair of ground engaging wheels 9 and the central portion is divided into two relatively movable parts by a horizontal pivot joint 11, the longitudinal axis of which corresponds with the rotational axis of the respective wheels 9 for that shuttlecar portion. Each of the wheels 9 is supported on a trailing arm 13 connected to the chassis of the portion by a suspension system, the subject of a further co-pending Patent Application. The shuttlecar is steered by a steering mechanism indicated generally at 15 in Figure 1c. Drive to each pair of wheels 9 is through a transmission system shown generally at 17.

An endless chain type conveyor 19 is arranged in use to sweep across the upper face of the shuttlecar, the conveyor being of largely known construction with a plurality of spaced transverse flight bars 21. The conveyor has a return run 23 running along the underside of the shuttlecar as shown at 23 in Figure 1b.

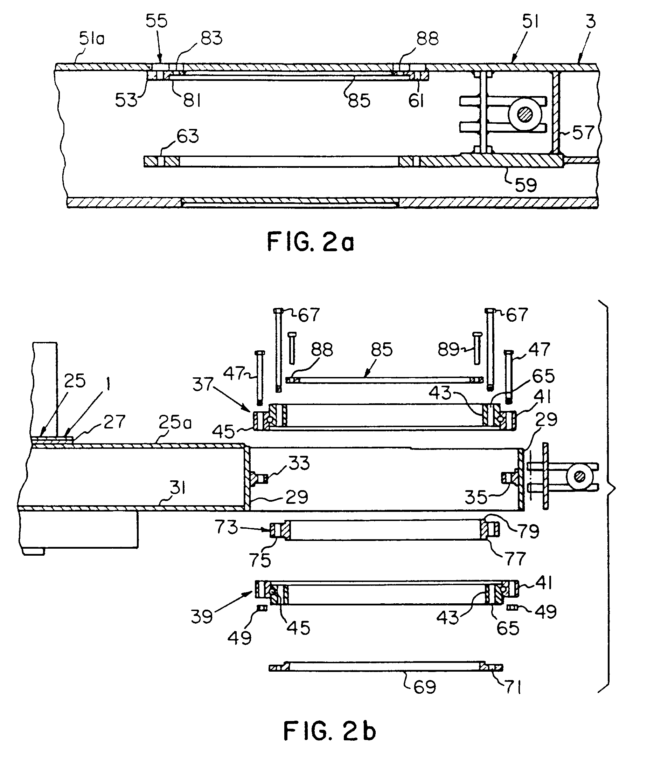

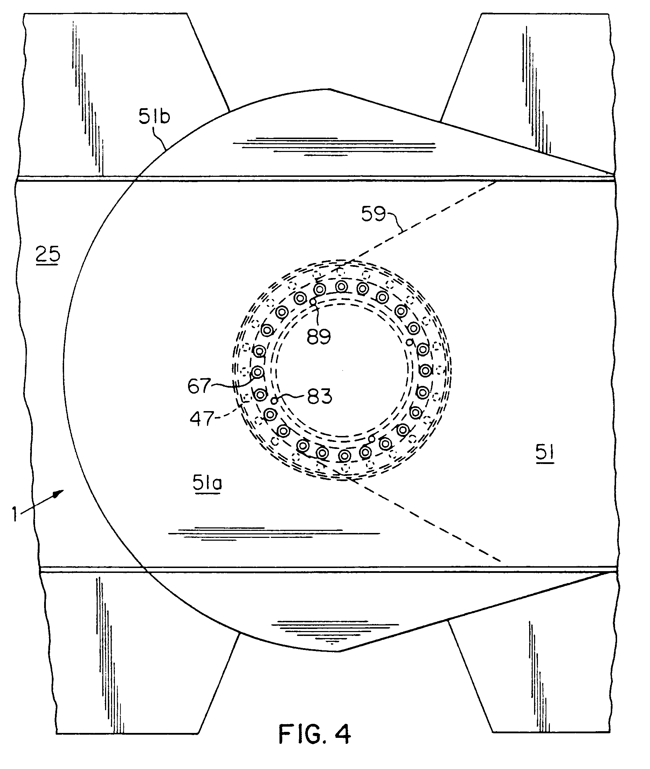

The articulation joint between the shuttlecar portions 1 and 3 will now be described with reference to Figures 2a-2c (the other joint being identical). Referring to Figure 2b, a deck 25 of the shuttlecar portion 1 is stepped down at 27, the step being arcuate as shown in Figure 4. Below the step 27 the deck 25 is formed by a plate 25a which terminates in an annular plate 29 welded at its top edge to the plate 25a and at its bottom edge to a further plate 31. An annular clevis 33 is welded to a central portion of the plate 29, this clevis being provided with a plurality of circumferentially spaced apertures 35.

An upper slewing ring shown generally at 37 is supported on the upper face of the clevis 33 and a lower slewing ring 39 bears against the lower face of the clevis 33, each slewing ring having an outer annular member 41 and an inner annular member 43, the inner member 43 being supported for rotation within the outer member 41 by a plurality of ballbearings 45. The outer member 41 has a plurality of circumferentially spaced apertures therein corresponding in size and spacing to the apertures 35 in the clevis 33 and the two slewing rings 37 and 39 are held in assembled relationship with the clevis 33 by a plurality of bolts 47, the ends of which are threaded to accept nuts 49.

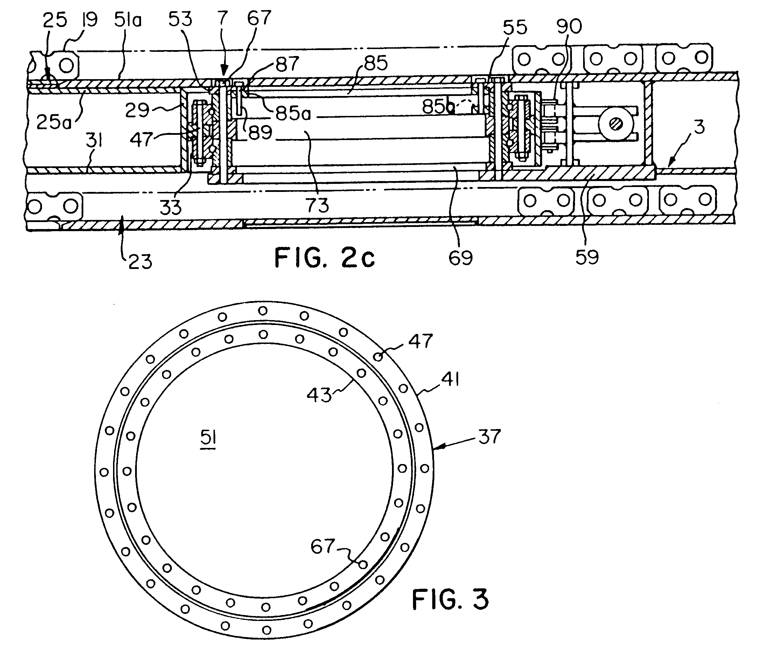

The inner members of each slewing ring are designed to be connected to the portion 3 of the shuttlecar, part of which is shown in Figure 2a. The deck 51 has a bulbous arcuate nose portion 51a, a peripheral edge 51b of which is arranged to mate with and form a snug fit within the arcuate step 27 in the deck 25 of the shuttlecar portion 1 as shown in Figure 2c. Welded to the underside of the nose portion of the deck 51 is a strengthening ring 53 thus allowing a plurality of circumferentially spaced recesses 55 to be formed in the deck. On the side of the ring 53 remote from the edge 51b a transverse plate 57 is welded to the underside of the deck 51, and a bottom plate 59 is welded to the bottom edge of the plate 57. A plurality of circumferentially spaced apertures 61 are arranged in the form of a circle in the strengthening ring 53 and a further circle of circumferentially spaced apertures 63, the spacing and location of which correspond with those of the apertures 61, are formed in the bottom plate 59. Each of the apertures 63 is tapped to provide an internal screw thread. The inner and outer circumferences of the strengthening ring 53 correspond with those of the inner member 43 of each slewing ring 37, 39, and each of the said inner members 43 is provided with a circle of circumferentially spaced axially extending apertures 65 therein, the size, location and spacing of which apertures 65 correspond with those of apertures 61, thus enabling the inner members of each slewing ring to be connected to the shuttlecar portion 3 with a plurality of threaded studs 67. As can be seen from Figure 2c, the top face of the slewing ring 37 is connected to the underface of the strengthening ring 53 and the bottom face of the slewing ring 39 is supported by means of a lower annular spacer 69 provided with a circule of apertures 71 therein on the upper face of the bottom plate 59. In order to stiffen up the joint thus formed, an annular inner spacer 73, also provided with a circle of apertures 75 therein, the spacing and size of which match those of the aperture 65, is also located between the inner member 43 of the slewing ring 37 and the inner member of the slewing ring 39, the inner spacer 75 being stepped on its top and bottom faces as shown at 77 and 79 so as to locate on the respective inner members 43 and the outer diameter of the annular inner spacer 73 being such that the ring forms a snug fit within the clevis 33. Furthermore, also to assist in stiffening the joint, a lower location ring 48 is provided within the joint. The ring 48 has an overall external diameter such that it forms a close fit within the inner spacer 73. The ring 48 really forms part of the male half of the joint (see Figure 2b) for assembly purposes. The ring 48 has a lower portion 50 of reduced external diameter corresponding to the internal diameters of the lower spacer 69 and an aperture 60 in the bottom plate 59. When the male and female joint halves have been assembled, as shown in Figure 2c, it will be noted that the reduced diameter portion of the lower location ring sits tightly within the aperture 60 and lower space 69, and thus, any major forces which would otherwise have been borne by other studs 67, are now borne by the lower location ring, which also sits tightly within the inner space 73.

The studs 67 pass through the apertures 65 in the slewing ring 37, the apertures 75 in the inner spacer 73, the apertures 65 in the lower slewing ring 39, and the apertures 71 in the lower spacer 69 and are then threadedly engaged in the tapped apertures 63 in the bottom plate 59 with the heads of the studs 67 being received in the recesses 55 of deck 51 so that they do not project above the surface of the deck.

The strengthening ring 53 incorporates an internal annular recess 81 on its under face and a plurality of circumferentially spaced apertures 83 are also provided in the ring 53 in the area of the annular recess 81, the apertures 83 extending in a circle. The recess 81 is designed to accept a location ring 85 which itself is provided with a plurality of circumferentially spaced apertures 87 therein, the location and spacing of which correspond with those of the apertures 83. The apertures 87 are internally tapped so as to provided a screw thread and the location ring 85 is held in position within the strengthening ring 53 by a plurality of threaded studs 89 passing through the apertures 81 and screwthreadedly engaging with the threaded apertures 87. There are two alternative positions for the location ring 85, an upper position being shown at 85a in Figure 2c and a lower position being shown at 85b in Figure 2c. As can be seen from Figure 2c, the thickness of the location ring 85 is greater than the depth of the recess 81 and the outer diameter of the ring 85 corresponds with the inner diameter of the inner member 43 of the slewing ring 37 so that when the articulation joint is assembled, the ring 85 will form a snug fit within the inner member 43 thus accurately locating the slewing ring 37 in the shuttlecar portion 3.

The lower ends of the studs 89 can be used to hold the lower location ring 48 in position, as shown in Figure 2c. Alternatively, ring 85 when in its lower position 85b can be used for this purpose.

As can be seen from Figures 2b and 2c, the plates 25a and 31 of the shuttlecar portion 1 together with the annular plate 29 provide a male portion of the articulation joint whereas the plate forming the nose portion 51a and the bottom plate 59 form a female portion of the articulation joint. When the articulation joint is assembled, the male portion of the joint fits within the female portion and the outer members of the two slewing rings are firmly connected to the male portion, whereas the inner members of the two slewing rings are firmly connected to the female portion. By virtue of the location ring, inner spacers and lower spacers associated with the female joint portion and the clevis associated with the male portion of the joint. an absolutely rigid articulation joint is provided in which two spaced apart slewing rings are incorporated.

One or more brackets (not shown) is connected to the annular plate 29 to each of which brackets a steering chain 87 is connected. The opposite end of each chain 87 is connected to extendible and retractable means secured to the shuttlecar portion 3, the arrangement being such that extension and retraction of these means cause the chain to apply a moment arm to the plate 29, thus causing articulation of the joint. This allows the articulated shuttlecar to be steered.

As can be seen from Figures 2b and 2c, the bolts 47 connecting the outer members of the slewing rings to the clevis 33 can be inserted from above, and likewise, the two sets of studs 67 for assembling the inner members of the slewing rings on the shuttlecar portion 3 can be inserted from the top of the articulation joint. This means that assembly and servicing of the joint can all be undertaken from above, which is an important safety feature.

It will of course be understood that the present invention has been described above purely by way of example, and modifications of detail can be made within the scope of the invention.

## Claims

1. An articulation joint for pivotally connecting together two portions (1, 3, 5) of a mining machine, the joint comprising first and second slewing rings (37, 39), each comprising an outer member (41) and an inner member (43) with a bearing race (45) located between the two members, the outer members being connectable to one portion of the mining machine and the inner member being connectable to the other portion of the mining machine, and wherein the two slewing rings are rigidly connected to each other.

2. A mining machine having a first portion and a second portion pivotally connected to the first portion by an articulation joint as claimed in claim 1, and wherein the outer members are connected to the first portion of the mining machine and the inner members are connected to the second portion of the machine, so that the one portion can pivot relative to the other portion about a vertical axis.

3. A mining machine as claimed in claim 2 wherein the two pivotally connected portions are part of a shuttlecar, and a upper run of a conveyor chain (19) is movable across the top of the two portions, and a return run (23) of the chain passes beneath the joint.

4. The invention as claimed in claim 1, 2 or 3 wherein the one portion comprises a flat annular clevis (33) with a plurality of circumferentially spaced apertures (35) extending parallel to the central axis of the annulus therein, the respective outer members of each slewing ring being secured to opposite faces of the clevis by a plurality of bolts (47) passing through apertures in the members and the apertures in the clevis.

5. The invention as claimed in claim 4 wherein the clevis (33) is welded within an annular plate, to which one or more brackets is welded and to which a steering means is connected to cause the one portion of the machine to pivot relative to the other about the articulation joint.

6. The invention as claimed in any one of claims 1-5 wherein said one portion comprises a male half of the joint, and the second portion of the mining machine comprises a female half of the joint.

7. The invention as claimed in claim 5 wherein the female half of the joint is formed of two vertically spaced, horizontally extending plates (25a, 31) between which the male part extends, the inner members of each slewing ring being connected, respectively, to the inner faces of the respective plates.

8. The invention as claimed in claim 7 wherein the two inner members are spaced apart by an inner spacer ring, and the two inner members, the inner spacer ring (73) and the two horizontal, vertically spaced plates are connected together by a plurality of threaded studs passing through respective ones of a plurality of vertically aligned apertures arranged in a circle and circumferentially spaced from each other.

9. The invention as claimed in claim 7 or 8 wherein a location ring (85) is provided and locates one of the inner members beneath the upper one of the two horizontally spaced plates, and a lower spacer is provided between the inner face of the lower one of the two horizontal, vertically spaced plates and the lower one of said inner members.

10. The invention as claimed in claim 8 or 9 wherein a lower location ring is provided which seats within the inner spacer ring, and extends into a lower part of the joint.

11. The invention as claimed in claim 10 when dependent on claim 9 wherein the lower location ring has a lower portion of reduced external diameter which locates tightly with the lower spacer and the lower one of said two horizontally spaced plates of the female half of the joint, with a step defining the reduced diameter resting on said lower spacer.

12. The invention as claimed in claim 8 or claim 9 when dependent on claim 8 wherein the upper one of said spaced plates is provided with a plurality of circumferentially spaced recesses in its upper face, in the bases of which the apertures for said threaded studs are provided, the recesses being sufficiently deep to receive the heads of the bolts so that they do not project above the main surface of said upper plate.

13. The invention as claimed in claim 12 wherein studs for securing the location ring are also located in said recess.

14. The invention as claimed in any one of claims 6-13 when dependent on claim 5 wherein the male half of the joint is formed of two vertically spaced plates held apart by said annular plate, there being an arcuate step in the upper one of said plates, the arcuate step being centred on the pivot axis of the joint, and the upper plate of the female half of the joint having a projecting portion with an arcuate edge which fits with a snug fit within the arcuate step.

## Patentansprüche

1. Gelenkverbindung aus einem Drehzapfen, der zwei Bereiche (1, 3, 5) einer Grubenfördermaschine miteinander verbindet, wobei die Gelenkverbindung einen ersten und einen zweiten Drehring (37, 39) aufweist, von denen jeder ein äußeres Element (41) und ein inneres Element (43) mit einem zwischen den zwei Elementen gelegenen Laufring (45) hat, wobei die äußeren Elemente mit einem Bereich der Grubenfördermaschine verbindbar sind, und die inneren Elemente mit dem anderen Bereich der Grubenfördermaschine verbindbar sind, und wobei die zwei Drehringe starr miteinander verbunden sind.

2. Grubenfördermaschine, mit einem ersten Bereich, und einem zweiten Bereich, der durch eine Gelenkverbindung gemäß Anspruch 1 mit dem ersten Bereich schwenkbar verbunden ist, wobei die äußeren Elemente mit dem ersten Bereich der Grubenfördermaschine verbunden sind, und die inneren Elemente mit dem zweiten Bereich der Grubenfördermaschine verbunden sind, so daß der eine Bereich um eine vertikale Achse relativ zu dem anderen Bereichs geschwenkt werden kann.

3. Grubenfördermaschine gemäß Anspruch 2, wobei die zwei schwenkbar miteinander verbundenen Bereiche ein Teil eines Pendelwagens sind, und ein oberer Strang einer Fördererkette (19) über die obere Seite der zwei Bereiche bewegbar ist, und ein Rücklauf-Strang (23) der Kette unter der Gelenkverbindung verläuft.

4. Erfindung gemäß Anspruch 1, 2 oder 3, wobei der eine Bereich einen ebenen, Befestigungsring (33) mit einer Vielzahl von über den Umfang mit Zwischenraum angeordneten Öffnungen (35) aufweist, die sich parallel zu der Mittelachse der Ringfläche erstrecken, wobei die jeweiligen äußeren Elemente jedes Drehrings an den entgegengesetzten Flächen des Befestigungsrings durch eine Vielzahl von Schraubenbolzen (47) befestigt sind, die durch Öffnungen in den Elementen und die Öffnungen in dem Befestigungsring hindurchgehen.

5. Erfindung gemäß Anspruch 4, wobei der Befestigungsring (33) innerhalb einer ringförmigen Platte angeschweißt ist, an die ein oder mehr Bügel angeschweißt sind, und mit der ein Lenkmittel verbunden ist, um zu bewirken, daß ein Bereich der Maschine relativ zu dem anderen um die Gelenkverbindung geschwenkt wird.

6. Erfindung gemäß irgendeinem der Ansprüche 1-5, wobei der eine Bereich eine innere Hälfte der Gelenkverbindung, und der zweite Bereich der Grubenfördermaschine eine äußere Hälfte der Gelenkverbindung aufweist.

7. Erfindung gemäß Anspruch 5, wobei die äußere Hälfte der Gelenkverbindung aus zwei mit vertikalem Zwischenraum angeordneten, sich horizontal erstreckenden Platten (25a, 31) gebildet wird, zwischen denen sich die innere Hälfte erstreckt, wobei die inneren Elemente jedes Drehrings mit den inneren Flächen der jeweiligen Platten verbunden sind.

8. Erfindung gemäß Anspruch 7, wobei die zwei inneren Elemente durch einen inneren Abstandsring auseinandergehalten werden, und die zwei inneren Elemente, der innere Abstandsring (73), und die zwei horizontalen, mit vertikalem Zwischenraum angeordneten Platten durch eine Vielzahl von Schraubenbolzen miteinander verbunden sind, die durch eine Vielzahl von vertikal ausgerichteten Öffnungen hindurchgehen, die kreisförmig mit Zwischenraum über den Umfang angeordnet sind.

9. Erfindung gemäß Anspruch 7 oder 8, wobei ein Positionierungsring (85) vorgesehen ist, der eines der inneren Elemente unter der oberen der zwei horizontal mit Zwischenraum angeordneten Platten positioniert, und ein unteres Abstandselement zwischen der inneren Fläche der unteren der zwei horizontalen, mit vertikalem Zwischenraum angeordneten Platten und dem unteren der inneren Elemente vorgesehen ist.

10. Erfindung gemäß Anspruch 8 oder 9, wobei ein unterer Positionierungsring vorgesehen ist, der innerhalb des inneren Abstandsrings angeordnet ist, und sich in einen unteren Teil der Gelenkverbindung erstreckt.

11. Erfindung gemäß Anspruch 10, falls von Anspruch 9 abhängig, wobei der untere Positionierungsring einen unteren Bereich von reduziertem äußerem Durchmesser hat, der in das untere Abstandselement und die untere der zwei horizontal mit Zwischenraum angeordneten Platten der äußeren Hälfte der Gelenkverbindung eingepaßt ist, wobei eine Stufe den reduzierten Durchmesser definiert, der auf dem unteren Abstandselement aufliegt.

12. Erfindung gemäß Anspruch 8, oder Anspruch 9, falls von Anspruch 8 abhängig, wobei die obere der mit Zwischenraum angeordneten Platten in ihrer Oberfläche mit einer Vielzahl von über den Umfang mit Zwischenraum angeordneten Aussparungen versehen ist, in deren Grundflächen die Öffnungen für die Schraubenbolzen vorgesehen sind, und die Aussparungen tief genug sind, um die Köpfe der Schraubenbolzen aufzunehmen, so daß sie nicht über die Hauptoberfläche der oberen Platte vorragen.

13. Erfindung gemäß Anspruch 12, wobei außerdem Schraubenbolzen zum Befestigen des Positionierungsrings in der Aussparung angeordnet sind.

14. Erfindung gemäß irgendeinem der Ansprüche 6-13, falls von Anspruch 5 abhängig, wobei die innere Hälfte der Gelenkverbindung von zwei mit vertikalem Zwischenraum angeordneten Platten gebildet wird, die durch die ringförmige Platte auseinandergehalten werden, wobei in der oberen der Platten eine bogenförmige Stufe angebracht ist, die bezüglich der Drehachse der Gelenkverbindung zentriert ist, und die obere Platte der äußeren Hälfte der Gelenkverbindung einen vorspringenden Bereich mit einem bogenförmigen Rand hat, der in einen Paßsitz innerhalb der bogenförmigen Stufe eingepaßt ist.

## Revendications

1. Joint articulé d'un pivot reliant ensemble deux parties (1, 3, 5) d'une machine de mine, le joint comprenant des première et deuxième bagues pivotantes (37, 39), chacune comprenant un élément extérieur (41) et un élément intérieur (43), avec une bague de roulement (45) située entre les deux éléments, les éléments extérieurs pouvant être reliés à une partie de la machine de mine et l'élément intérieur pouvant être relié à l'autre partie de la machine de mine, et dans lequel les deux bagues pivotantes sont reliées de façon rigide l'une à l'autre.

2. Machine de mine ayant une première partie et une deuxième partie reliée de façon pivotante à la première partie par un joint articulé selon la revendication 1, et dans laquelle les éléments extérieurs sont reliés à la première partie de la machine de mine et les éléments intérieurs sont reliés à la deuxième partie de la machine, de sorte qu'une partie peut pivoter relativement à l'autre partie autour d'un axe vertical.

3. Machine de mine selon la revendication 2, dans laquelle les deux parties reliées de façon pivotante font partie d'un chariot va-et-vient, et un passage supérieur d'une chaîne de convoyeur (19) est mobile d'un côté à l'autre du sommet des deux parties, et un passage de retour (23) de la chaîne passe au-dessous du joint.

4. Invention selon la revendication 1, 2 ou 3, dans laquelle une partie comprend un étrier annulaire plat (33) comportant une pluralité d'ouvertures (35) espacées de façon circonférentielle, s'étendant parallèlement à l'axe central de la couronne se trouvant dedans, les éléments extérieurs respectifs de chaque bague pivotante étant fixés aux faces opposées de l'étrier par une pluralité de boulons (47) passant à travers des ouvertures pratiquées dans les éléments et les ouvertures de l'étrier.

5. Invention selon la revendication 4, dans laquelle l'étrier (33) est soudé à l'intérieur d'une plaque annulaire, à laquelle une ou plusieurs patte(s) d'attache sont soudées et à laquelle un moyen de commande est relié pour provoquer le pivotement d'une partie de la machine relativement à l'autre autour du joint articulé.

6. Invention selon l'une quelconque des revendications 1 à 5, dans laquelle ladite une partie comprend une moitié mâle du joint et la deuxième partie de la machine de mine comprend une moitié femelle du joint.

7. Invention selon la revendication 5, dans laquelle la moitié femelle du joint est formée de deux plaques (25a, 31) espacées verticalement, s'étendant horizontalement, entre lesquelles la partie mâle s'étend, les éléments intérieurs de chaque bague pivotante étant reliés, respectivement, aux faces intérieures des plaques respectives.

8. Invention selon la revendication 7, dans laquelle les deux éléments intérieurs sont séparés par une bague d'écartement intérieure, et les deux éléments intérieurs, la bague d'écartement intérieure (73) et les deux plaques horizontales, espacées verticalement, sont reliées ensemble par une pluralité de goujons filetés passant à travers les ouvertures respectives d'une pluralité d'ouvertures alignées verticalement, disposées en cercle et espacées les unes des autres de façon circonférentielle.

9. Invention selon la revendication 7 ou 8, dans laquelle une bague de positionnement (85) est prévue et positionne un des éléments intérieurs au-dessous de la plaque supérieure des deux plaques espacées horizontalement, et une pièce d'écartement inférieure est prévue entre la face intérieure de la plaque inférieure des deux plaques horizontales, espacées verticalement et la plaque inférieure desdits éléments intérieurs.

10. Invention selon la revendication 8 ou 9, dans laquelle une bague de positionnement inférieure est prévue qui est placée à l'intérieur de la bague d'écartement intérieure, et qui s'étend dans une partie inférieure du joint.

11. Invention selon la revendication 10, lorsqu'elle dépend de la revendication 9, dans laquelle la bague de positionnement inférieure présente une partie inférieure de diamètre extérieur réduit qui se positionne étroitement avec la pièce d'écartement inférieure et la plaque inférieure desdites deux plaques espacées horizontalement de la moitié femelle du joint, comportant un épaulement définissant le diamètre réduit reposant sur ladite pièce d'écartement inférieure.

12. Invention selon la revendication 8 ou 9, lorsqu'elle dépend de la revendication 8, dans laquelle la plaque supérieure desdites plaques espacées est pourvue d'une pluralité d'évidements, espacés de façon circonférentielle, dans sa face supérieure, à la base desquels les ouvertures pour lesdits goujons filetés sont prévues, les évidements étant suffisamment profonds pour loger les têtes des boulons, de sorte qu'ils ne font pas saillie au-dessus de la surface principale de ladite plaque supérieure.

13. Invention selon la revendication 12, dans laquelle les goujons destinés à fixer la bague de positionnement sont également situés dans ledit évidement.

14. Invention selon l'une quelconque des revendications 6 à 13, lorsqu'elles dépendent de la revendication 5, dans laquelle la moitié mâle du joint est formée de deux plaques espacées verticalement, séparées par ladite plaque annulaire, un épaulement en forme d'arc existant dans la plaque supérieure desdites plaques, l'épaulement en forme d'arc étant centré sur l'axe de pivotement du joint, et la plaque supérieure de la moitié femelle du joint présentant une partie en saillie comportant un bord en forme d'arc qui s'ajuste avec un ajustage à frottement doux à l'intérieur de l'épaulement en forme d'arc.
